# EUROPEAN PATENT APPLICATION

(11) **EP 2 237 153 A2**
(43) Date of publication of application: **06.10.2010**
(21) Application number: 10157624.7
(22) Date of filing: 24.03.2010
(51) Int. Cl.: G06F 9/45

(54) **Computer readable recording medium storing executable program, executable program generating apparatus, and executable program generating method**

(30) Priority: 27.03.2009 JP 2009078113
(71) Applicant: FUJITSU LIMITED, Kawasaki-shi, Kanagawa 211-8588 (JP)
(72) Inventor: Nakayama, Hiroyoshi, Kawasaki-shi Kanagawa 211-8588 (JP)
(74) Representative: Wilding, Frances Ward

(57) **Abstract**

A recording medium storing a computer readable resource-bound program for instructing the computer to execute processing, the resource-bound program including receiving an execution start instruction, initiating the executable program when the execution start instruction is an execution instruction for the executable program including a resource used for generating an executable program, and extracting and outputting the resource when the execution start instruction is an output instruction of the resource.

## Description

### CROSS-REFERENCE TO RELATED APPLICATIONS

This application is based upon and claims priority to prior Japanese Patent Application No. 2009-78113 filed on March 27, 2009 in the Japanese Patent Office, the entire contents of which are incorporated herein by reference.

### FIELD

Various embodiments discussed herein relate to a computer readable recording medium storing an executable program, an executable program generating apparatus, and an executable program generating method.

### BACKGROUND

Nowadays, in software development, object files are generated by compiling source files (source programs) and header files using compiler, and executable programs are generated by linking the generated object files and a library using linker.

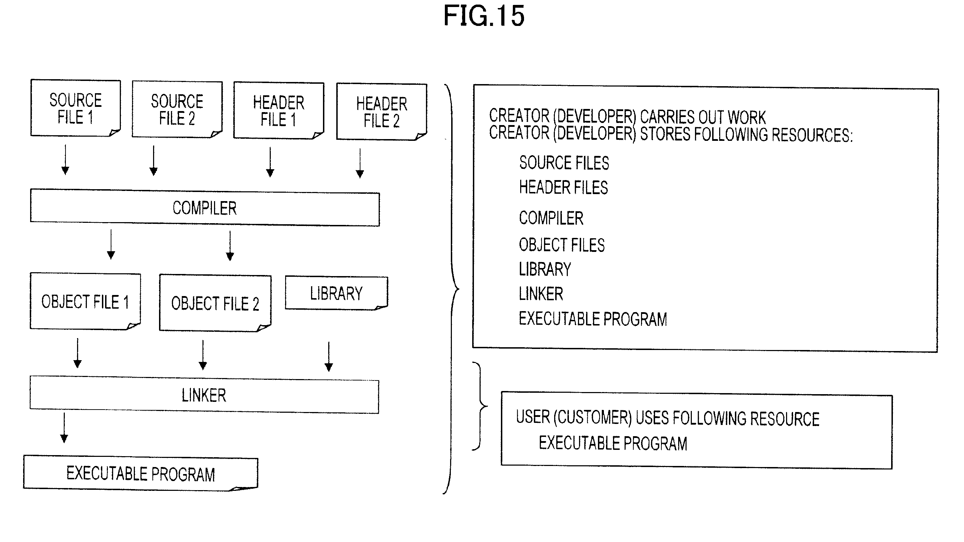

FIG. 15 illustrates the process of known software development.

A software developer creates source files ("source file 1" and "source file 2" in FIG. 15) and header files ("header file 1" and "header file 2" in FIG. 15). These files are compiled by using a compiler to generate object files ("object file 1" and "object file 2" in FIG. 15). Then, by linking the object files with a library provided in advance using a linker, an executable program is output from the linker.

A software developer carries out such a series of operations and stores development resources (or simply referred to as "resources," which is a term used synonymously with "development resources"), such as the source files, the header files, the object files, the library, the executable program, the compiler, and the linker. The executable program is distributed to users (customers) who use and store the program.

In this way, in software development up to the present day, the software developer has had to store and maintain development resources, such as source files, header files, libraries, the compiler, and the linker, which are used for generating executable programs.

The workforce required for product development and system maintenance has been reduced, and thus one system developer is in charge of the development of many products. In such a situation, it is a very complicated process to maintain the development resources, such as source files, libraries, compilers, and linkers, used during the development of products. It is, however, important to maintain development resources in order to respond to function additions and failure corrections of products. When maintenance is not carried out properly, the executable program and the source files do not correspond to each other, and thus, there is a risk in that functions will be added by referring to source files of older versions. During the development of many products, the source files may be lost by the software developer, and thus correction of the executable program may become impossible.
[PATENT DOCUMENT 1] Japanese Laid-open Patent Publication No. 5-100830
[PATENT DOCUMENT 2] Japanese Laid-open Patent Publication No. 2007-172514

### SUMMARY

A recording medium storing a computer readable resource-bound program for instructing the computer to execute processing, the resource-bound program includes receiving an execution start instruction, initiating the executable program when the execution start instruction is an execution instruction for the executable program including a resource used for generating an executable program, and extracting and outputting the resource when the execution start instruction is an output instruction of the resource.

### BRIEF DESCRIPTION OF THE DRAWINGS

FIG. 1 illustrates the configuration of a first embodiment;
FIG. 2 is a flow chart illustrating the operation of a resource-bound-executable-program creating unit;
FIG. 3 is a flow chart illustrating the operation of a resource-binding control unit;
FIG. 4 is a flow chart illustrating the operation of a resource-bound executable program;
FIG. 5 illustrates a command (without parameters) used for executing a resource-bound executable program;
FIG. 6A illustrates a command (with parameters) used for executing a resource-bound executable program;
FIG. 6B illustrates parameters;
FIG. 7 illustrates the operation of the execution (without parameters) of a resource-bound executable program;
FIG. 8 illustrates the operation of the execution (with parameters) of a resource-bound executable program;
FIG. 9 illustrates the configuration of a second embodiment;
FIG. 10 illustrates the configuration of a resource-bound executable program according to the second embodiment;
FIG. 11A is a flow chart illustrating the operation of a resource-binding control unit according to the second embodiment;
FIG. 11B is a flow chart illustrating the operation of the resource-binding control unit according to the second embodiment;
FIG. 12 is a flow chart illustrating the operation of the resource-bound executable program according to the second embodiment;
FIG. 13 illustrates the hardware configuration of an information processing apparatus including a resource-bound-executable-program creating unit;
FIG. 14 illustrates the loading of a program that realizes a resource-bound-executable-program creating unit to an information processing apparatus; and
FIG. 15 illustrates the processing flow of known software development.

### DESCRIPTION OF EMBODIMENTS

Embodiments of the present invention will be described with reference to the drawings.

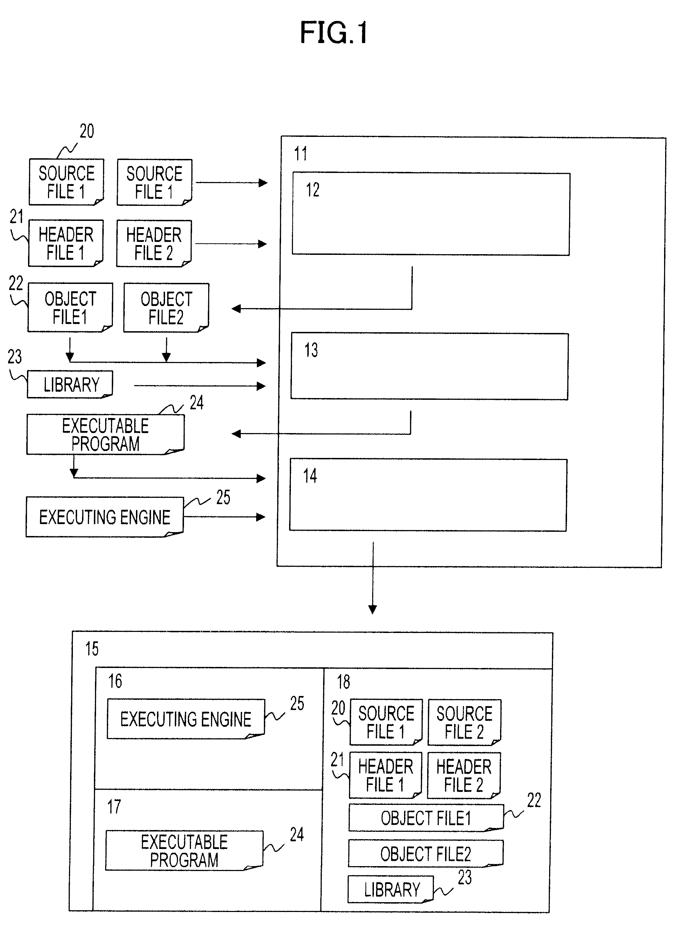

FIG. 1 illustrates the configuration of a first embodiment of a resource-bound executable program, a generating apparatus thereof, and a generating method thereof.

FIG. 1 illustrates the configuration that is realized in an information processing apparatus used for software development. FIG. 1 illustrates a resource-bound-executable-program creating unit 11 generating a resource-bound executable program 15 that contains an executable program and development resources.

As depicted in FIG. 1, the resource-bound executable program 15 is generated in such a manner to include an executing-engine placement area 16 where an executing engine 25 is placed, an executable-program placement area 17 where an executable program 24 is placed, a development-resource placement area 18 where development resources, such as source files 20, header files 21, object files 22, and a library 23, are placed. The executing engine 25 controls the execution of the resource-bound executable program 15, and its operation will be described below.

The resource-bound-executable-program creating unit 11 includes a compiler 12, a linker 13, and a resource-binding control unit 14. The compiler 12 and the linker 13 carry out processing equivalent to that carried out by known compilers and linkers.

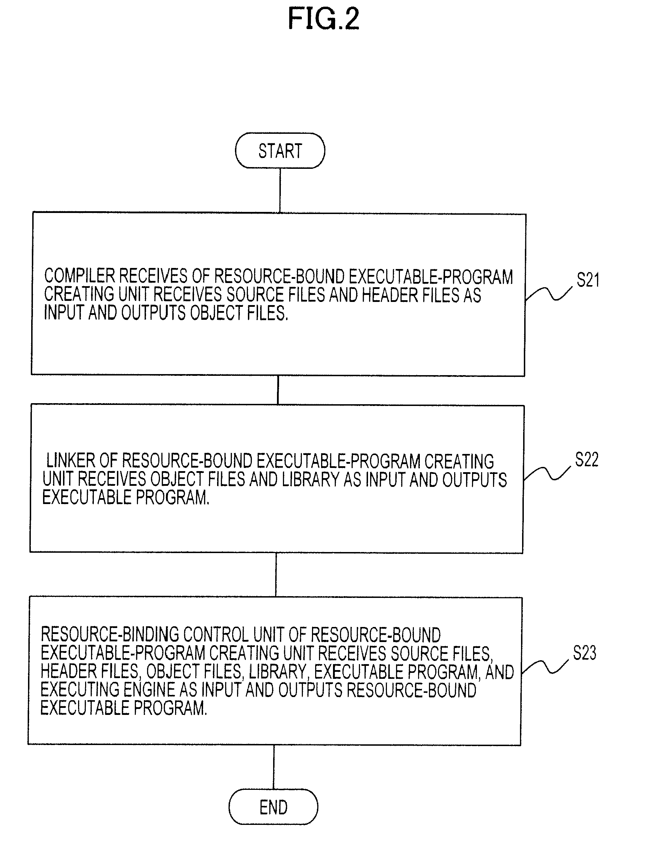

FIG. 2 is a flow chart illustrating the operation of the resource-bound-executable-program creating unit 11. The process up to the output of the resource-bound executable program 15 will be described with reference to FIGS. 1 and 2.

First, the compiler 12 of the resource-bound-executable-program creating unit 11 receives the source file 20 and the header file 21, which are created by the software developer, as input and outputs the object file 22 (S21 in FIG. 2)

Next, the linker 13 of the resource-bound-executable-program creating unit 11 receives the object file 22 and the library 23 as input and outputs the executable program 24 (S22 in FIG. 2).

Then, the resource-binding control unit 14 of the resource-bound-executable-program creating unit 11 receives the source file 20, the header file 21, the object file 22, the library 23, the executable program 24, and the executing engine 25 as input resources and outputs the resource-bound executable program 15 (S23 in FIG. 2).

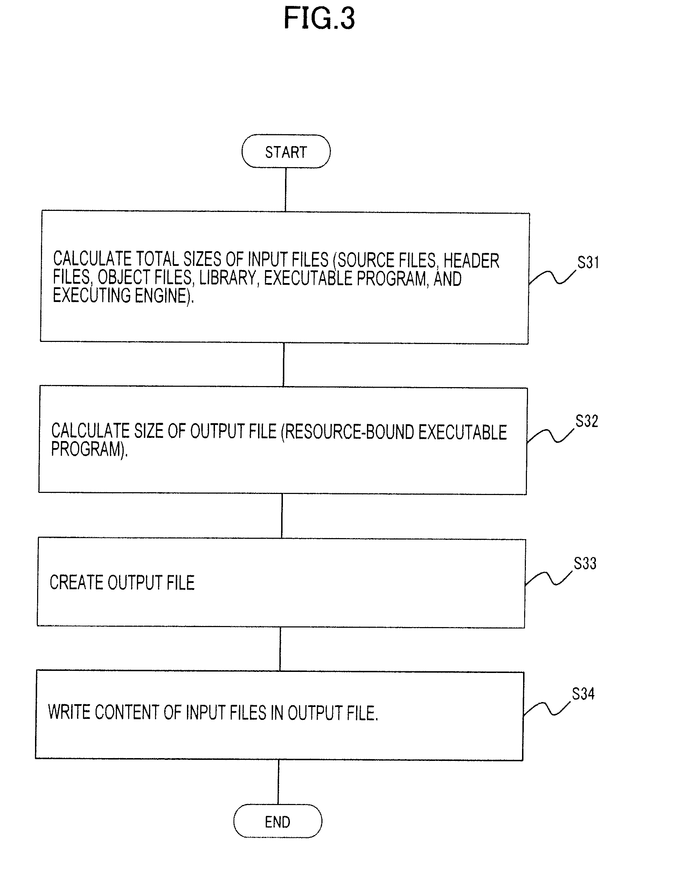

The process of the resource-binding control unit 14, which is the process of S23 in FIG. 2, will be described in more detail with reference to the flow chart in FIG. 3.

First, the resource-binding control unit 14 calculates the total size of the input files, such as the source file 20, the header file 21, the object file 22, the library 23, the executable program 24, and the executing engine 25 (S31 in FIG. 3).

Next, the size of the resource-bound executable program 15, which is an output file, is calculated on the basis of the total size of the input files, determined in S31 (S32 in FIG. 3).

Then, an output file is created on the basis of the output file size determined in S32 (S33 in FIG. 3), and the contents of the input files are written in the output file before the resource-bound executable program 15 is output (S34 in FIG. 3).

As depicted in FIGS. 2 and 3, by employing the configuration depicted in FIG. 1, the resource-bound executable program 15 that binds the development resources to the executable program is generated.

Next, the execution of the generated resource-bound executable program 15 will be described.

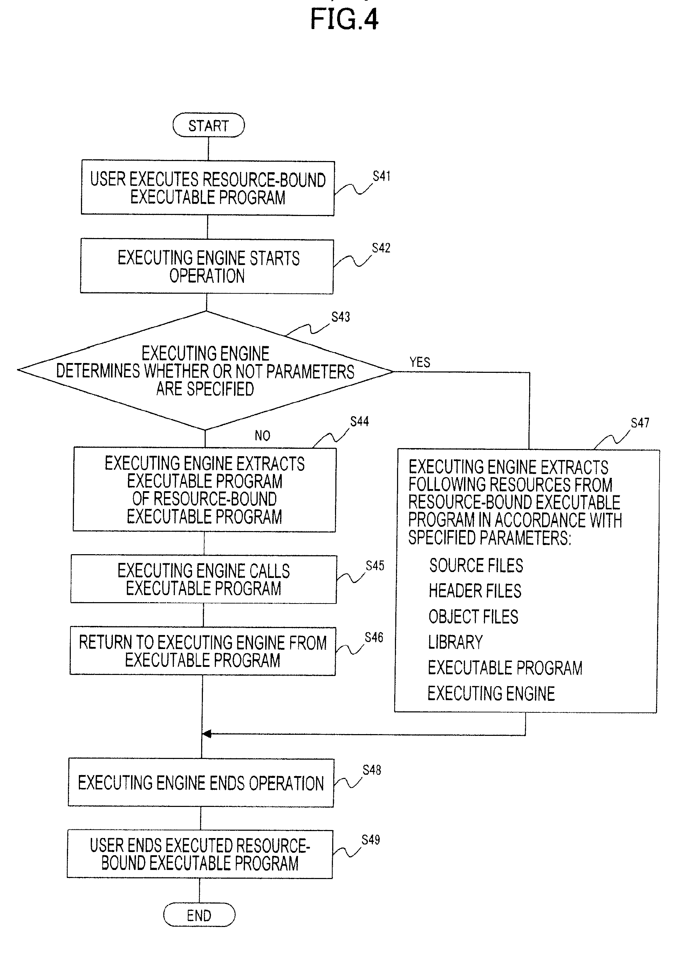

FIG. 4 is a flow chart illustrating the execution of the resource-bound executable program 15.

First, a user executes the resource-bound executable program 15 (S41 in FIG. 4). Upon execution of the resource-bound executable program 15, operation of the executing engine 25 starts (S42 in FIG. 4). Then, the executing engine 25 determines whether or not parameters for the execution are specified when the resource-bound executable program 15 is executed (S43 in FIG. 4).

The parameters are included in a command that instructs the execution of the resource-bound executable program 15. In this embodiment, when a section of the executable program 24 is to be executed, execution is instructed by inputting a command without parameters to the information processing apparatus, and when at least one development resource, such as the source file 20 or the header file 21, is extracted and acquired from the resource-bound executable program 15, the execution is instructed by inputting a command with specified parameters to the information processing apparatus.

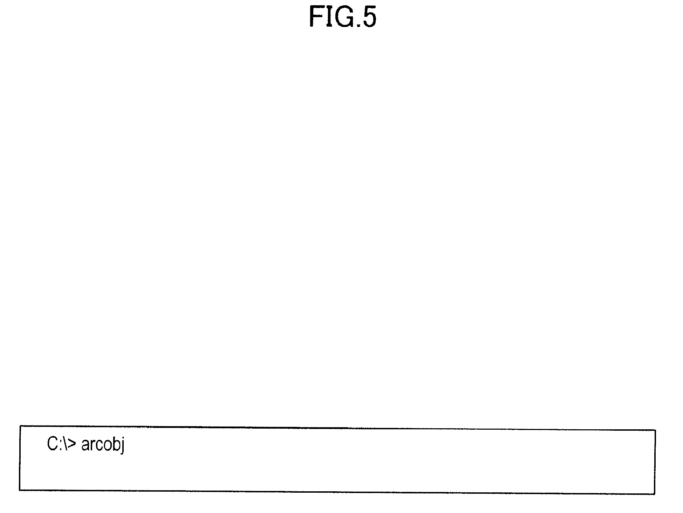

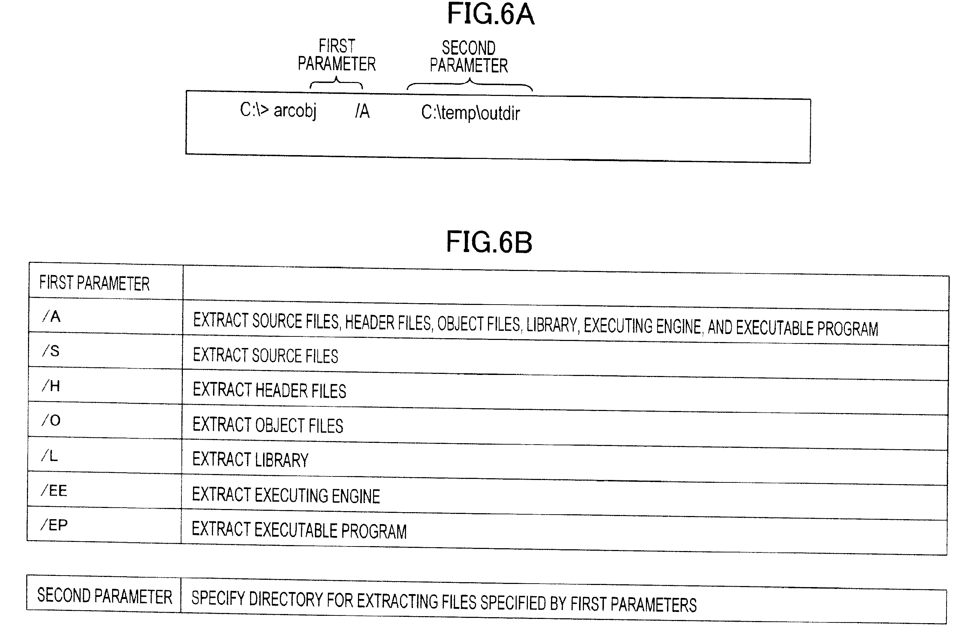

In other words, if the name of the resource-bound executable program 15 is "arcobj", the command depicted in FIG. 5 is input to execute the executable program. Then, the executable program 24 placed in the executable-program placement area 17 of the resource-bound executable program 15 is executed. When a command including parameters, such as those depicted in FIG. 6A, are input and executed, the development resource corresponding to the specified first parameter among the development resources that are placed in the development-resource placement area 18 of the resource-bound executable program 15 is extracted to a location corresponding to the second parameter. FIG. 6B illustrates the types of parameter according to this embodiment. The types of parameters are listed below.
First Parameters:
/A Extract source file, header file, object file, library, execution engine, and executable program.
/S Extract source file
/H Extract header file
/O Extract object file
/L Extract library file
/EE Extract executing engine
/EP Extract executable program
Second Parameters:
Specifies a directory for extracting an object specified by a first operand.

Now the description will return to the flow chart in FIG. 4.

In S43 in FIG. 4, the process goes to S44 when parameters are not specified in the execution command (NO) or to S47 when parameters are specified (YES).

In S44, the executing engine 25 extracts the executable program 24 in the resource-bound executable program 15. Then, in S45, the executable program 24, which is obtained by the executing engine 25 through extraction of the executable program 24, is activated. When the execution of the executable program 24 is completed, the executable program 24 returns to the executing engine 25 in S46, and the process goes to S48.

In S47, the executing engine 25 extracts the development resources on the basis of the parameters specified. Then, the process goes to S48.

Then, in S48, the operation of the executing engine 25 ends, and in S49, the operation of the resource-bound executable program 15 that is executed by the user ends.

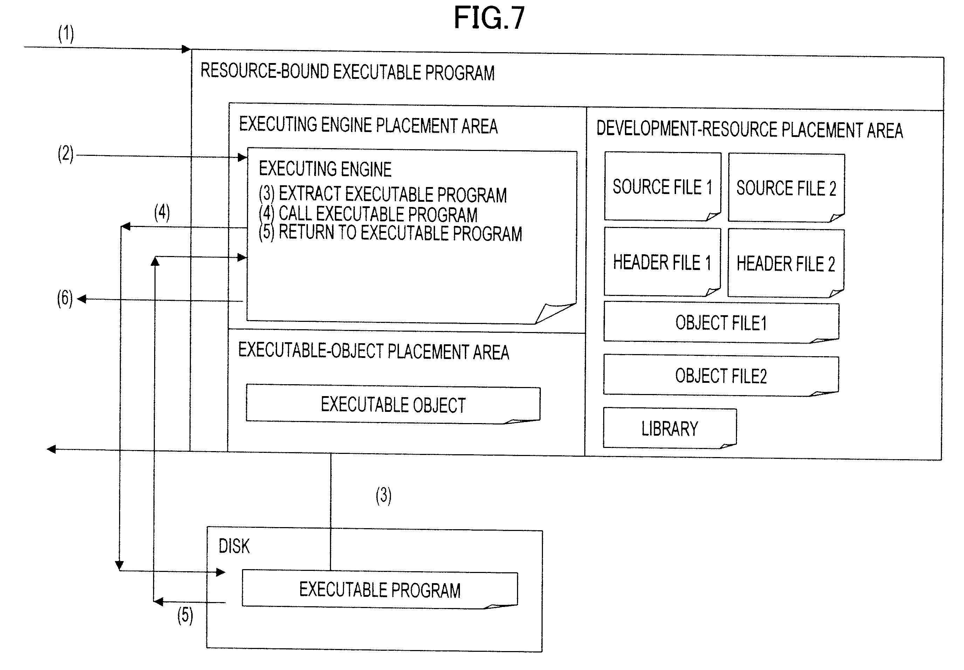

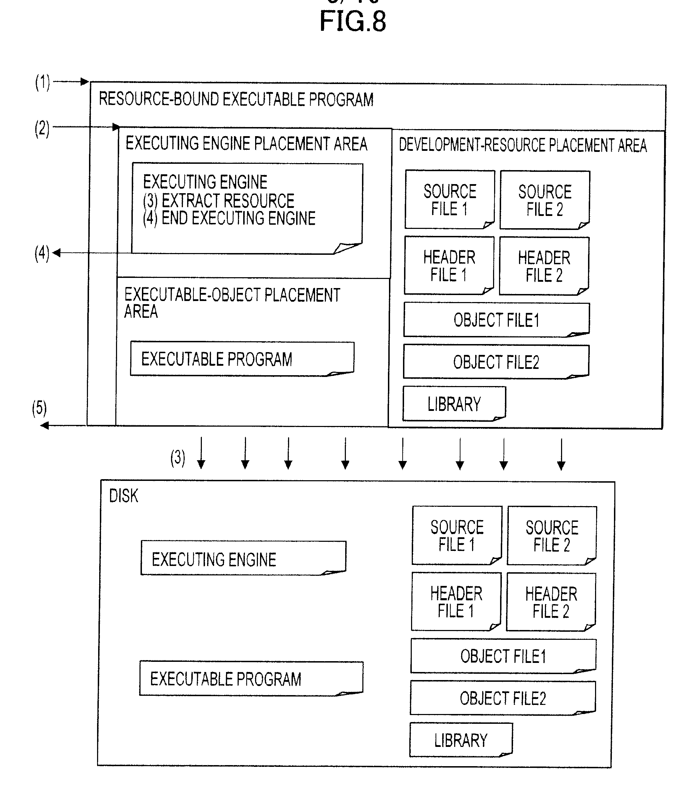

In the above explanation, the operation of the resource-bound executable program 15 is described with reference to FIG. 4. Cases in which the resource-bound executable program 15 is to be executed without or with parameters will be described in detail with reference to FIGS. 7 and 8, respectively.

First, a case in which the resource-bound executable program 15 is executed with no parameters will be described with reference to FIG. 7.

After initiating the resource-bound executable program 15 by a command such as that depicted in FIG. 5 ((1) in FIG. 7), the executing engine 25 in the resource-bound executable program 15 operates first ((2) in FIG. 7). Then, the executing engine 25 extracts the executable program 24 from the resource-bound executable program 15 ((3) in FIG. 7), calls the executable program 24 ((4) in FIG. 7), and operates the executable program 24. When the executable program 24 ends, the executing engine 25 returns ((5) in FIG. 7), and the operation of the executing engine 25 completes ((6) in FIG. 7). Then, the resource-bound executable program 15 completes its execution ((7) in FIG. 7).

Next, a case in which the resource-bound executable program 15 is executed with parameters will be described with reference to FIG. 8.

After initiating the resource-bound executable program 15 by a command such as that depicted in FIG. 6A, ((1) in FIG. 8), the resource-bound executable program 15 operates first ((2) in FIG. 8). Then, the executable engine 25 extracts the development resources, such as source files, header files, and object files, that correspond to the command specified by the parameters((3) in FIG. 8). When extraction of the development resources completes, the operation of the executable engine 25 completes its execution ((4) in FIG. 8), and then, the resource-bound executable program 15 completes ((5) in FIG. 8).

As described above, since the executable program 24 contains the executing engine 25, either the execution of the executable program 24 or the extraction of the development resources can be selected.

Next, a second embodiment will be described.

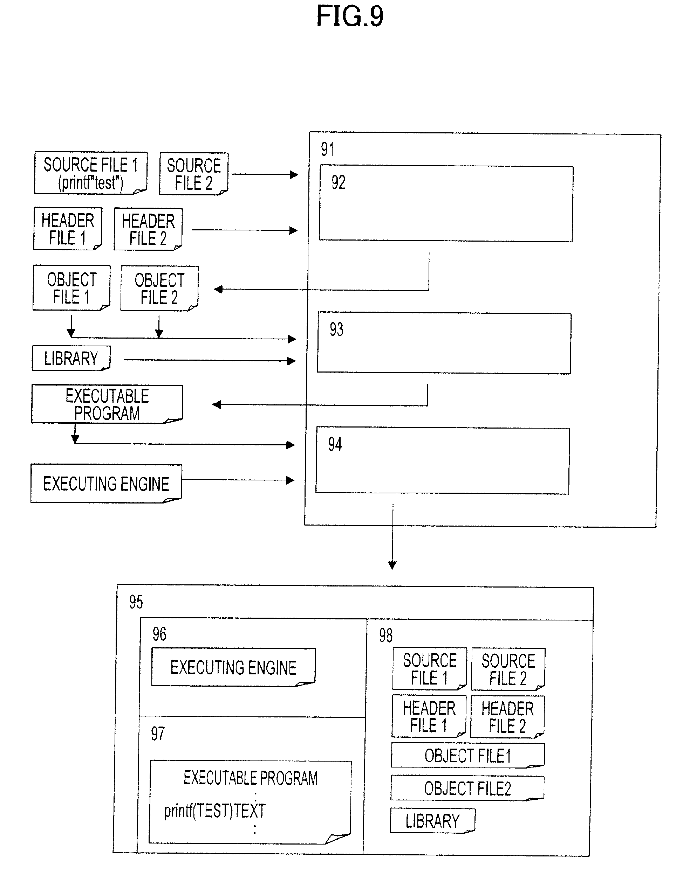

The configuration of the second embodiment is illustrated in FIG. 9. The configuration of the second embodiment may be the same as that of the first embodiment, except that "printf(test)" is written in the source file.

In other words, the second embodiment includes an executable program that displays a character string "test" on a display of an information processing apparatus. With this embodiment, the data structure and operation of the resource-bound executable program, which have already been described in the first embodiment, will be described in more detail.

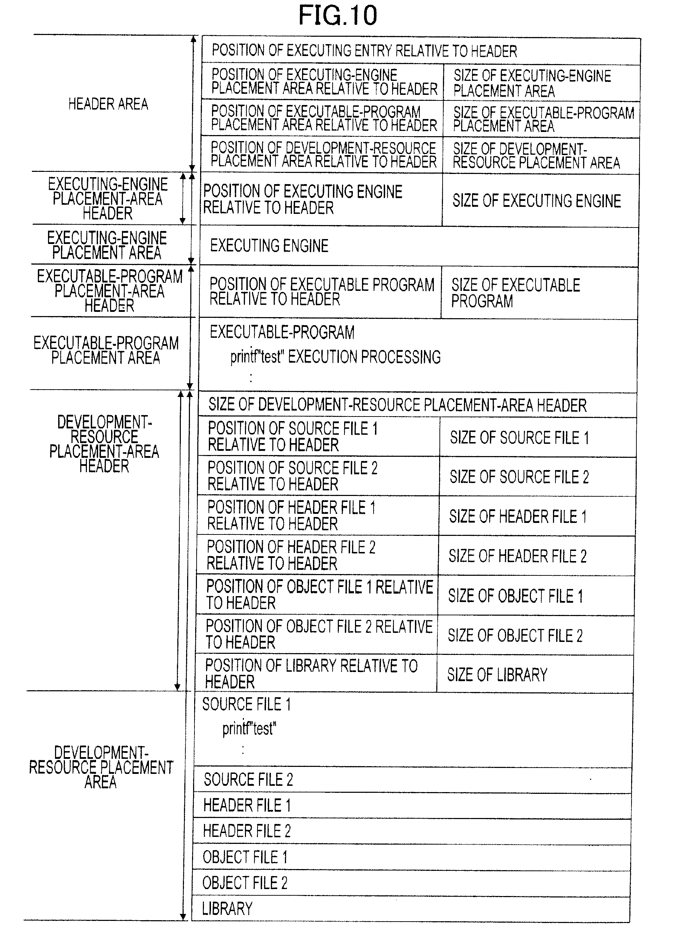

First, the data structure of the resource-bound executable program will be illustrated in FIG. 10.

The resource-bound executable program is generated as an output file by the resource-bound-executable-program creating unit.

In the second embodiment, a configuration including an executing-engine placement area, an executable-program placement area, and a development-resource placement area is described. More specifically, a header area is provided at the head portion of the file, and respective header parts are provided in the executing-engine placement area, the executable-program placement area, and the development-resource placement area.

First, the header area at the head portion of the file contains the following information: the position of the executing entry relative to the header; the position of the executing-engine placement area relative to the header; the size of the executing-engine placement area: the position of the executable-program placement area relative to the header; the size of the executable-program placement area; the position of the development-resource placement area relative to the header; and the size of the development-resource placement area.

Then, the executing-engine placement area follows the header area. The header section of the executing-engine placement area contains the information of the position about the executing engine relative to the header and the size of the executing engine. The main body of the executing engine follows this header section.

The executable-program placement area follows the executing-engine placement area. The header section of the executable-program placement area contains the position of the executable program relative to the header and the size of the executable program. The main body of the executable program follows this header section. In this embodiment, a binary code that executes "printf(test)" is placed as a executable program, for example.

The development-resource placement area follows the executable-program placement area. The header section of the development-resource placement area contains the placement positions and sizes of the files that are development resources contained in the resource-bound executable program, e.g., the following information: the size of the development-resource placement-area header; the position of the source file 1 relative to the header; the size of the source file 1; the position of the source file 2 relative to the header; the size of the source file 2; the position of the header file 1 relative to the header; the size of the header file 1; the position of the header file 2 relative to the header; the size of the header file 2; the position of the object file 1 relative to the header; the size of the object file 1; the position of the object file 2 relative to the header; the size of object file 2; the position of the library relative to the header; and the size of the library. Then, subsequent to the header section, the development resources, such as the source files, the header files, and the object files, are placed in sequence.

As depicted in FIG. 10, the resource-bound executable program includes one file formed by merging the executing engine, the executable program, and the development resources.

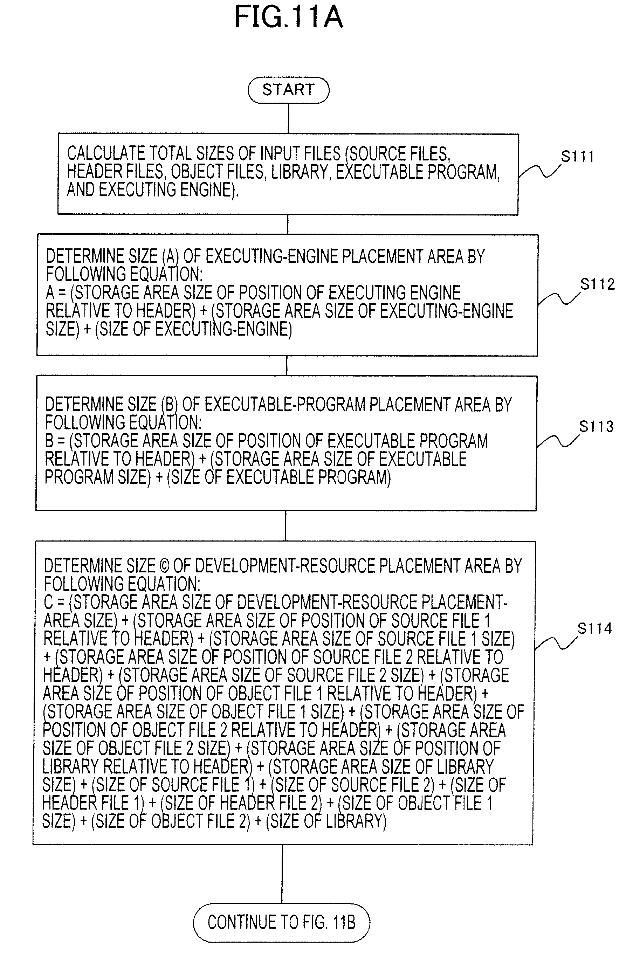

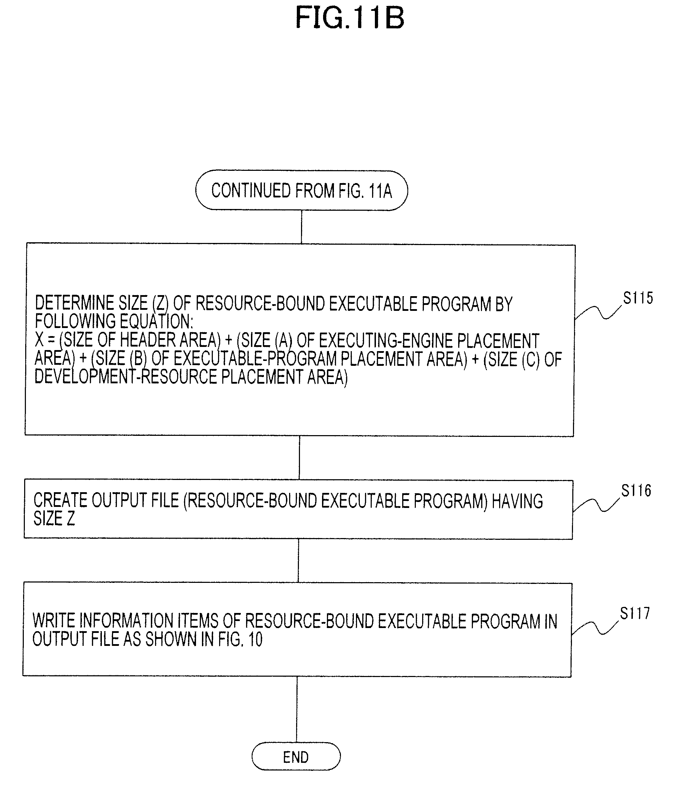

The process of a resource-binding control unit (94 in FIG. 9) on outputting the resource-bound executable program depicted in FIG. 10 will be described with reference to the flow illustrated in FIGS. 11A and 11B.

First, the sizes of the source files, the header files, the object files, the library, the executable program, and the executing engine are calculated (S111 in FIG. 11A).

Next, in S112, the size (A) of the executing-engine placement area is determined (A = (size of storage area of the position of the executing engine relative to the header) + (size of the storage area of the executing engine size) + (size of the executing engine)).

Next, in S113, the size (B) of executable-program placement area is determined. (B= (size of storage area of the position of the executable program relative to the header) + (size of the storage area of the executable program size) + (size of the executable program)).

Next, in S114, the size (C) of development-resource placement area is determined. (C = (size of the storage area of the development-resource placement-area header size) + (size of the storage area of the position of the source file 1 relative to the header) + (size of the storage area of the source file 1 size) + (size of the storage area of the position of the source file 2 relative to the header) + (size of the storage area of the source file 2 size) + (size of the storage area of the position of the object file 1 relative to the header) + (size of the storage area of the object file 1 size) + (size of the storage area of the position of the object file 2 relative to the header) + (size of the storage area of the object file 2 size) + (size of the storage area of the position of the library relative to the header) + (size of the storage area of the library size) + (size of the source file 1) + (size of the source file 2) + (size of the header file 1) + (size of the header file 2) + (size of the object file 1) + (size of the object file 2) + (size of the library)).

Next, in S115, the size (X) of the resource-bound executable program is determined. (X = (size of the header area) + (size (A) of the executing-engine placement area) + (size (B) of the executable-program placement area) + (size (C) of the development-resource placement area)).

Next, in S116, an output file with a size of X is created. Then, in S117, the information items in the resource-bound executable program depicted in FIG. 10 are written in the created output file.

As described above, the resource-bound executable program depicted in FIG. 10 is generated.

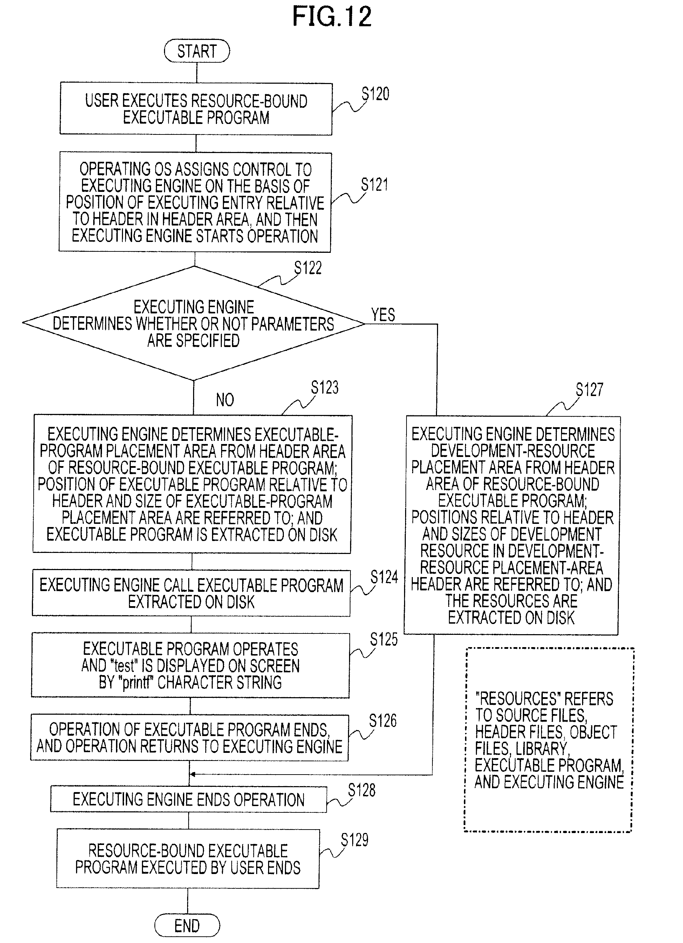

Next, the operation in response to the execution of the resource-bound executable program is described with reference to the flow chart depicted in FIG. 12. The parameters used for command execution in this embodiment may be the same as those in the first embodiment.

First, in S120, the user executes the resource-bound executable program using a command such as that depicted in FIGS. 5 or 6A.

Next, in S121, the operating OS (Operating System) assigns control to the executing engine on the basis of the position of the executing entry relative to the header in the header area of the resource-bound executable program, and then the executing engine starts its operation.

Then, in S122, the executing engine determines whether or not parameters are specified. When parameters are specified (YES), the process goes to S127, whereas, when parameters are not specified (NO), the process goes to S123.

When parameters are specified, the development-resources placement area is determined from the header area of the resource-bound executable program in S127, the positions relative to the header and sizes of the development resources in the development-resource placement-area header are referred to, and the resources corresponding to the specified parameters are extracted on the disk of the information processing apparatus. Then, the process goes to S128.

When parameters are not specified, the executing engine determines the executable-program placement area from the header area of the resource-bound executable program in S123, the position of the executable program relative to the header and the size of the executable-program placement area are referred to, and the executable program is extracted on the hard disk drive of the information processing apparatus. Then, in S124, the executing engine initiates the executable program extracted on the hard disk drive. In S125, the executable program is operated, and "test" is displayed on the display of the information processing apparatus in accordance with the character string "printf", for example. Then, in S126, the operation of the executable program completes, and the process returns to the executing engine. Then, the process goes to S128.

In S128, the executing engine ends its operation. In S129, the user ends the executed resource-bound executable program.

As depicted in the flow depicted in FIG. 12, the executing engine can control the execution in such manner as depicted in FIGS. 7 and 8.

In the above, the first and second embodiments are described in detail with reference to the drawings. In the embodiments described above, an executable program containing development resources, such as source files, header files, and libraries, is generated as the resource-bound executable program, for example. Then, this resource-bound executable program is distributed to users. Similar to a known executable program, the resource-bound executable program itself is executable. Furthermore, it is possible to extract and acquire development resources, such as source files, header files, and libraries, from the resource-bound executable program when required.

In this way, the user can execute an executable program in the same way as a known executable program and the user can extract and acquire development resources, such as source files, header files, and libraries, from the resource-bound executable program when required. In this way, since the development resources, which are used for generating an executable program, coexist with the executable program, the software developer is relieved of storing and maintaining the development resources. As a result, the work efficiency of the software developer is increased. Moreover, even when the software developer customizes the functions of the executable program in accordance with the requests of the users, since the source program files in which the added functions are written exist together with the executable program stored by the user, maintenance and further customizing can be easily carried out later.

In the above, the resource-bound executable program, the generating apparatus thereof, and the generating method thereof, according to the embodiments of the present invention, have been described in detail. However, these are not limited to the embodiments described above. In the embodiments described above, the development resources included source files, header files, and libraries. The development resources, however, are not limited thereto, and any type of information resource that is used for software development may be used. The types of parameters for commands used for executing the resource-bound executable program are depicted in FIG. 6B. These, however, are not limited thereto. In this way, various modifications of the resource-bound executable program, the generating apparatus thereof, and the generating method thereof are possible within the scope of the prevent invention.

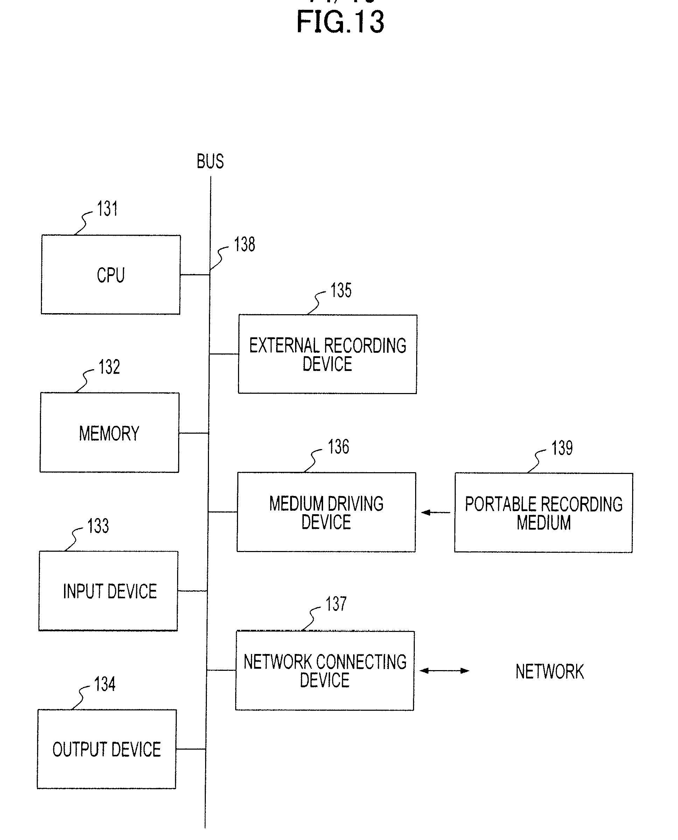

The hardware configuration of the information processing apparatus realizing the above-described embodiments is illustrated in FIG. 13.

In the information processing apparatus, a central processing unit (CPU) 131, a memory 132, an input device 133, an output device 134, an external storage device 135, a medium driving device 136, a portable recording medium 139, and a network connecting device 137 are connected via a bus 138.

The memory 132, for example, includes a read only memory (ROM) and a random access memory (RAM) and is used for storing data for processing the execution of an executable program or used for carrying out processing of resource-bound executable program generation.

The CPU 131 uses the memory 132 in order to execute the above-described flow using.

The input device 133 is, for example, a keyboard, a pointing device, and/or a touch panel. The output device 134 is, for example, a display and/or a printer.

The external storage device 135 is, for example, a magnetic disk media, an optical disk media, or a magneto-optic disk media. The external storage device 135 is used for storing the resource-bound executable program or storing extracted development resources. Furthermore, the external storage device 135 is used for storing software programs used for realizing the resource-bound-executable-program creating unit and loading the software programs onto the memory 132, when required.

The medium driving device 136 drives the portable recording medium 139 and accesses the recorded content. The portable recording medium 139 may be any computer-readable recording medium, such as a memory card, a memory stick, a flexible disk, a compact disc read only memory (CD-ROM), an optical disk, a magneto-optical disk, or a digital versatile disk (DVD). The resource-bound executable program and the software programs that realize the resource-bound-executable-program creating unit may be stored in the portable recording medium 139 and may be loaded on to the external storage device 135 and/or the memory 132, when required.

The network communication device 137 communicates with arbitrary networks (lines), such as local area network (LAN) and wide area network (WAN), via an external device and carries out data conversion for the communication. Furthermore, when required, the information processing apparatus receives from the external device including a computer-readable media storing a software program via the network, the resource-bound executable program and/or the software programs used for realizing the resource-bound-executable-program creating unit and loads these onto the external storage device 135 and/or the memory 132.

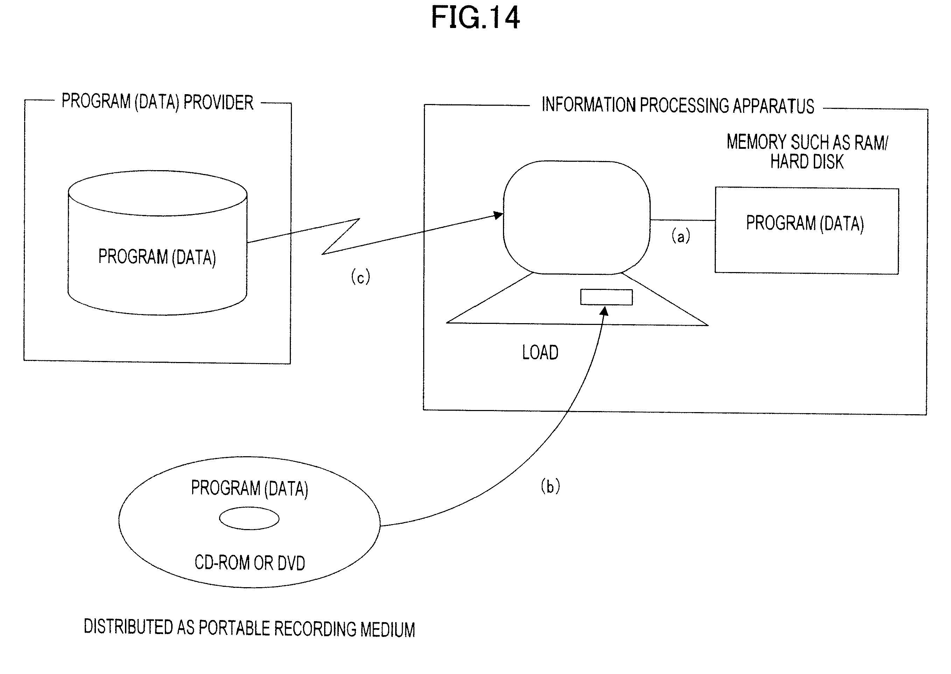

A method of loading the resource-bound executable program onto the information processing apparatus and a method of loading the software programs used for realizing the resource-bound-executable-program creating unit are illustrated in FIG. 14.

FIG. 14A illustrates a method of loading programs and data stored in the external storage device, such as a hard disk drive of the information processing apparatus by the information processing apparatus.

FIG. 14B illustrates a method of loading programs and data recorded on the portable recording medium, such as a CD-ROM or a DVD, via the medium driving device of the information processing apparatus.

FIG. 14C illustrates a method of loading, via the network communication device of the information processing apparatus, programs and data provided via a network by an information provider.

The embodiments described above may be configured as a program for instructing the information processing apparatus to carrying out processing for generating the above-described resource-bound executable program, i.e., the processing of the resource-bound-executable-program creating unit. Furthermore, the embodiment described above may also be configured as a computer-readable recording medium on which a resource-bound executable program or a program for instructing the information processing apparatus to carry out processing of the resource-bound-executable-program creating unit. Furthermore, the embodiments described above may also be configured as a computer data signal that represents the above-described resource-bound executable program realized in carrier waves or a program for instructing the information processing apparatus to carrying out processing of the resource-bound-executable-program creating unit.

As described above, the executable program, the executable program generating apparatus thereof, and the executable program generating method thereof are not limited to those described above, and the configuration and/or shape of these may be modified in various ways within the scope of the present invention.

The embodiments can be implemented in computing hardware (computing apparatus) and/or software, such as (in a non-limiting example) any computer that can store, retrieve, process and/or output data and/or communicate with other computers. The results produced can be displayed on a display of the computing hardware. A program/software implementing the embodiments may be recorded on computer-readable media comprising computer-readable recording media. The program/software implementing the embodiments may also be transmitted over transmission communication media. Examples of the computer-readable recording media include a magnetic recording apparatus, an optical disk, a magneto-optical disk, and/or a semiconductor memory (for example, RAM, ROM, etc.). Examples of the magnetic recording apparatus include a hard disk device (HDD), a flexible disk (FD), and a magnetic tape (MT). Examples of the optical disk include a DVD (Digital Versatile Disc), a DVD-RAM, a CD-ROM (Compact Disc - Read Only Memory), and a CD-R (Recordable)/RW. The media are non-transitory media.

The many features and advantages of the embodiments are apparent from the detailed specification and, thus, it is intended by the appended claims to cover all such features and advantages of the embodiments that fall within the true spirit and scope thereof. Further, since numerous modifications and changes will readily occur to those skilled in the art, it is not desired to limit the inventive embodiments to the exact construction and operation illustrated and described, and accordingly all suitable modifications and equivalents may be resorted to, falling within the scope thereof.

## Claims

1. A non-transitory recording medium storing a computer readable resource-bound program for instructing the computer to execute processing, the resource-bound program causing the computer to perform a method comprising:
receiving an execution start instruction;
initiating the executable program when the execution start instruction is an execution instruction for the executable program including a resource used for generating an executable program; and
extracting and outputting the resource when the execution start instruction is an output instruction of the resource.

2. The recording medium according to claim 1, wherein the resource-bound program further includes:
information indicating at which position in a file constituting the resource-bound executable program the resource and the program are stored, and
a storing area in which information about a data size of the resource and the executable program are stored, and
wherein initiation of the executable program or extraction of the resource is carried out based on the information stored in the storing area.

3. The recording medium according to claim 1, wherein the resource includes at least one of one of a source file, a header file, an object file, and a library.

4. An executable-program generating apparatus for generating a resource-bound executable program, the apparatus comprising:
an executable-program generating unit that generates the executable program from a resource included in the resource-bound executable program; and
a resource-binding control unit that generates the resource-bound executable program by binding the resource, the executable program, and an executing engine controlling the execution of the executable program.

5. The executable-program generating apparatus according to claim 4, wherein the resource-binding control unit calculates the total data size of the resource, the executable program, and the executing engine to calculate the size of the resource-bound executable program to be generated, and generates the resource-bound program by creating an output file based on the size of the resource-bound program and writing the data about the resource, the executable program, and the executing engine in the output file.

6. The executable-program generating apparatus according to claim 4, wherein the executable-program generating unit includes:
a compiler that compiles a source file and a header file to generate an object file, and
a linker that binds the object file and a library to generate the executable program.

7. The executable-program generating apparatus according to claim 4, wherein the executing engine receives an execution start instruction to the resource-bound program, initiates the executable program when the execution start instruction is an execution instruction for the executable program, and extracts and outputs the resource when the execution start instruction is an instruction of outputting the resource.

8. A non-transitory recording medium storing a computer readable program-generating program for instructing the computer to execute processing for generating a resource-bound program including an executable program, the program-generating program causing the computer to perform a method comprising:
generating the executable program from a resource included in the executable program; and
binding the resource, the executable program, and an executing engine controlling the execution of the executable program to generate the resource-bound program.

9. The recording medium according to claim 8, wherein the binding step comprises:
calculating the total data size of the resource, the executable program, and the executing engine to calculate the size of the resource-bound executable program to be generated, and
generating the resource-bound executable program by creating an output file based on the size of the resource-bound executable program to be generated and writing the data about the resource, the executable program, and the executing engine in the output file.

10. The recording medium according to claim 8, wherein the generating comprises:
compiling a source file and a header file to generate an object file, and
binding the object file and a library to generate the executable program.

11. The recording medium according to claim 8, wherein the executing engine receives an execution start instruction to the resource-bound program, initiates the executable program when the execution start instruction is an execution instruction for the executable program, and extracts and outputs the resource when the execution start instruction is an instruction of outputting the resource.

12. A method of generating a program for enabling a computer to generate a resource-bound program including an executable program, the method comprising:
generating the executable program from a resources included in the executable program; and
binding the resource, the executable program, and an executing engine controlling the execution of the executable program to generate the resource-bound program.

13. The method of generating a program according to claim 12, wherein the binding comprises:
calculating the total data size of the resource, the executable program, and the executing engine so as to calculate the size of the resource-bound executable program to be generated, and
generating the resource-bound program by creating an output file on the basis of the size of the resource-bound program to be generated and writing the data about the resource, the executable program, and the executing engine in the output file.

14. The method of generating a program according to claim 12, wherein the generating comprises:
compiling a source file and a header file to generate an object file, and
binding the object file and a library to generate the executable program.

15. The method of generating a program according to claims 12, wherein the executing engine receives an execution start instruction to the resource-bound program, initiates the executable program when the execution start instruction is an execution instruction for the executable program, and extracts and outputs the resource when the execution start instruction is an instruction of outputting the resource.
